# EUROPÄISCHE PATENTSCHRIFT

(11) **EP 1 747 395 B1**
(45) Veröffentlichungstag und Bekanntmachung des Hinweises auf die Patenterteilung: **17.06.2009**
(21) Anmeldenummer: 05740736.3
(22) Anmeldetag: 29.04.2005
(51) Int. Cl.: F16K 31/10, F16K 31/06, F16K 27/00

(54) **KLAPPENVENTIL**
FLAP VALVE
SOUPAPE A CLAPET

(30) Priorität: 30.04.2004 DE 102004021765
(43) Veröffentlichungstag der Anmeldung: 31.01.2007
(73) Patentinhaber: Biechele, Günter, 88299 Leutkirch (DE)
(72) Erfinder: BIECHELE, Günter, 88299 Leutkirch (DE); NATTERER, Bernd, 88299 Leutkirch (DE)
(74) Vertreter: Pfister, Stefan Helmut Ulrich
(86) Internationale Anmeldenummer: PCT/EP2005/004686
(87) Internationale Veröffentlichungsnummer: WO 2005/108840

(56) Entgegenhaltungen:
- EP-A- 1 316 749
- DE-A1- 3 528 072
- DE-B- 1 247 793
- US-A- 3 102 712
- US-A- 4 074 701
- US-A- 4 765 370
- US-A- 5 711 346
- US-A- 5 799 696
- US-B1- 6 286 548

## Beschreibung

Die Erfindung betrifft ein Ventil zum Schalten beziehungsweise Regeln von Strömungen oder Drücken eines festen, flüssigen oder gasförmigen Mediums, wobei die Dichtklappe des Ventils von einer Auslöseeinheit betätigt wird und die Dichtklappe in der Ventilkammer eines Ventilkörpers des Ventils aufgrund der Stellung der Auslöseeinheit positionierbar ist, die Dichtklappe einen mit der Auslöseeinheit zusammenwirkenden Hebel aufweist und der Hebel mindestens einen Dichtsitz trägt.

Vorbeschriebene Ventile sind zum Beispiel aus der deutschen Patentschrift 1 247 793 bekannt. Hierbei wirkt ein Klappanker auf einen Hebel, der in einer aus elastischen Material bestehenden Tasche eingesteckt ist. Das Material der elastischen Tasche dient zum Abdichten eines Ein- beziehungsweise Auslasses. Dies hängt von der Stellung des Klappankers ab, woraus eine entsprechende Stellung des Hebels resultiert. Das elastische Taschenmaterial wird auch gleichzeitig zum Abdichten der Ventilkammer eingesetzt, woraus das Problem resultiert, daß eine Verletzung des elastischen Materials, insbesondere bei dem Aufdrücken des Hebels auf den Ein- beziehungsweise Auslaß, nicht nur zu einer Undichtigkeit des Ventils führt, sondern auch zu einer Leckage des gesamten hier gezeigten Magnetventiles.

Aus der US 6, 286, 548 ist ein Ventil gemäß Oberbegriff von Anspruch 1 bekannt.

Es ist Aufgabe der vorliegenden Erfindung ein Ventil der beschriebenen Ausgestaltung derart zu verbessern, daß dieses sicher und zuverlässig leckagedicht ist und die Schaltcharakteristik einstellbar ist.

Gelöst wird diese Aufgabe durch ein Ventil mit den Merkmalen des Anspruchs 1.

Durch den erfindungsgemäßen Vorschlag wird erreicht, daß der Dichtsitz und die Dichtung voneinander getrennt und entkoppelt sind Verschleiß oder Beschädigungen im Dichtsitzbereich führt damit nicht zu einer Leckage der Ventilkammer. Hierbei ist insbesondere zu beachten, daß bei der erfindungsgemäßen Ausgestaltung vermieden wird, daß das Medium, zum Beispiel Flüssigkeiten und so weiter, in die elektrisch betätigte Auslöseeinheit gelangt und dort entsprechende Beschädigungen hervorruft.

Durch die erfindungsgemäße Variante ist es auch möglich, durch die Länge des Hebels die Charakteristik, insbesondere das kurzfristiges Ansprechverhalten für das öffnen oder Schließen des ventils, günstig zu beeinflussen. Dabei ist das Ventil keinerlei Beschränkungen bezüglich der Anordnung von Dichtsitz beziehungsweise Dichtung unterworfen, wie nach dem Stand der Technik. Nach dem Stand der Technik ist ein großer Hebel unter Umständen mit großen Weglängen, über die der Hebel sich bewegt, verbunden, was zu einer entsprechenden mechanischen Beanspruchung des elastischen Taschenmaterials führt. Hingegen ist es nach der Erfindung nun möglich, schnell schaltende Ventile, zum Beispiel mit verhältnismäßig lang in die Ventilkammer hineinragende Hebel zu realisieren und trotzdem für absolute Dichtheit der Anordnung zu sorgen.

Des Weiteren eignet sich der erfindungsgemäße Vorschlag in idealer Weise als Grundmodul für den Aufbau von komplexeren Ventilblöcken, die aus mehreren Ventilen bestehen.

In diesem Zusammenhang wird betont, daß die Erfindung schon dann eingesetzt wird, wenn nur einer der vorgenannten Vorteile erreicht beziehungsweise teilweise realisiert wird.

Die Anordnung des Hebels beziehungsweise die Wirkung des Hebels nach der Erfindung ist dabei so gestaltet, daß der Hebel sowohl translatorisch, zum Beispiel entlang einer Achse, als auch rotatorisch einsetzbar ist. Beide Varianten zählen jeweils zur Erfindung.

In einer bevorzugten Variante der Erfindung wird vorgeschlagen, daß die Dichtung von dem Dichtsitz beabstandet ist. Die Erfindung schließt nicht aus, daß die Dichtung und der Dichtsitz aus dem gleichen Material geschaffen sind, in den beiden Anwendungsfällen geht es um ein möglichst zuverlässiges, sicheres Abdichten, jedoch ist die funktionale Anordnung getrennt, derart, daß der Einsatz des Dichtsitzes die Dichtung nicht beeinträchtigt und umgekehrt. So wird zum Beispiel gemäß der Erfindung vorgeschlagen, daß der Dichtsitz fest auf dem Hebel angeordnet ist und zum Beispiel nur unter Zerstörung des Dichtsitzes vom Hebel trennbar ist. Eine solche Ausgestaltung kann zum Beispiel durch ein Aufspritzen beziehungsweise Umspritzen des Hebels mit dem als Dichtsitz dienenden Dichtmaterial erreicht werden.

Es ist vorgesehen, daß die Dichtung zum Abdichten der Ventilkammer dient. Geschickterweise wird das Ventil modulartig aus dem Ventilkörper und der Auslöseeinheit aufgebaut. Die Dichtung sorgt dafür, daß die Ventilkammer abgedichtet ist und das Medium nicht unbeabsichtigt ausströmt.

Insbesondere wenn der Ventilkörper zur Bildung der Ventilkammer aus mindestens zwei Ventilkörperteilen besteht, ist es günstig, daß die Dichtung zwischen den Ventilkörperteilen angeordnet ist. Neben der hier vorgeschlagenen mehrstückigen Ausgestaltung des Ventilkörpers ist es natürlich auch möglich, den Ventilkörper einstückig auszubilden beziehungsweise den zur Bildung der Ventilkammer notwendigen Bereich des Ventilkörpers einteilig auszubilden. Dies kann zum Beispiel durch eine taschenartige Ausgestaltung in einem einstückigen Ventilkörper erfolgen.

Der Vorteil, wenn der Ventilkörper zur Bildung der Ventilkammer aus mehreren Ventilkörperteilen besteht liegt insbesondere darin, daß in der Ventilkammer komplexe oder hochkomplexe Ausgestaltungen in den Wandungen einarbeitbar sind, da mit den entsprechenden spanabhebenden Bearbeitungsmaschinen die Ventilkörperteile zur Schaffung entsprechender Kanalsysteme bearbeitbar sind. Zum Beispiel ist eine solche Ausgestaltung gerade bei komplexeren Umschaltventilen und so weiter günstig. Die Ventilkammer nimmt dann die Dichtklappe mit dem Dichtsitz auf, wobei geschickterweise die Dichtung der Dichtklappe zwischen den Ventilkörperteilen angeordnet ist und so für eine Abdichtung des Ventilkörpers sorgt. So sorgt die Dichtung nicht nur dafür, daß die Dichtung den Hebel mit dem Dichtsitz gegenüber der Auslöseeinheit abdichtet, sondern erfüllt einen doppelten Zweck, nämlich auch ein Abdichten einer aus mehreren Ventilkörperteilen bestehenden, entsprechend komplex ausgebildeten Ventilkammer.

Der Hebel der Dichtklappe verbindet die Ansteuerung des Dichtsitzes an dem in die Ventilkammer hineinragenden Hebel mit einer außerhalb des Ventils angeordneten Auslöseeinheit. Für die Führung des Hebels in dem Ventilkörper ist ein Dichtklappenkanal vorgesehen. Der Dichtklappenkanal erlaubt dabei eine gewisse Beweglichkeit des Hebels. Günstigerweise wird die Dichtung den Dichtklappenkanal am Ventilkörper abdichten und so für eine Dichtheit der Ventilkammer in diesem Bereich sorgen.

Die Ausbildung eines Dichtklappenkanals ist dabei nicht nur bei einem einteiligen Aufbau des Ventilkörpers vorgesehen, diese ergibt sich natürlich in gleicher Weise auch bei einem aus mehreren Ventilkörperteilen aufgebauten Ventilkörper. Dabei braucht der Dichtklappenkanal nicht symmetrisch aufgebaut sein, es sind auch asymmetrische Bauweisen möglich.

In einer bevorzugten Variante der Erfindung ist vorgesehen, daß die Dichtung als Ringdichtung ausgebildet ist. Eine Ringdichtung als solches ist im Stand der Technik zum Beispiel als O-Ring-Dichtung hinlänglich bekannt. Durch diese erfindungsgemäße Variante umschließt die Dichtung vollständig den Dichtsitz, woraus sich ergibt, daß der Hebel die Dichtung durchdringt. Eine solche Ausgestaltung ist insbesondere deswegen günstig, da die Dichtung sowieso benötigt wird und so nicht nur ein sicheres Abdichten der Ventilkammer um den Dichtsitz herum, sondern auch ein Abdichten der Durchführung des Hebels in die Ventilkammer gleichzeitig erreicht. Natürlich ist es alternativ und zur Erfindung gehörig auch möglich, für die Ansteuerung des Dichtsitzes eine separaten Ausgestaltung, zum Beispiel durch eine seitliche Bohrung oder Zugang zu wählen, der dann seinerseits eine entsprechende Abdichtung erfährt. Auch diese Variante gehört zur Erfindung.

Neben der erfindungsgemäß beschriebenen Anordnung, daß der Hebel die Dichtung durchdringt, woraus natürlich folgt, daß der Hebel die Dichtung trägt, ist aber auch eine Variante möglich, bei welcher der Hebel zwar die Dichtung trägt, aber eine andere Ausgestaltung für die Abdichtung des Hebels gewählt wird. Die hierfür dann vorgesehene Abdichtung erfüllt gegebenenfalls nur die Funktion, den Hebel in der Ventilkammer abzudichten.

Günstigerweise ist vorgesehen, daß der Hebel mit der Dichtung eine vormontierte Einheit bildet. Im Hinblick auf eine möglichst variable Verwendung der Erfindung ist vorgesehen, den Hebel mit Dichtung als eigenständige Baugruppe zu realisieren und so in verschiedenen Anwendungsbereichen einzusetzen.

In einer bevorzugten Variante der Erfindung ist vorgesehen, daß der Hebel als um eine Schwenkachse schwenkender Schwenkhebel ausgebildet ist. Ein Vorzug der Erfindung liegt insbesondere darin, daß auf eine einfache mechanische Verbindung geachtet wird, also die Auslöseeinheit direkt an dem Schwenkhebel einerseits angreift und der Schwenkhebel an seinem anderen Ende den Dichtsitz aufweist. Natürlich gehören auch komplizierte Varianten zur Erfindung, bei welchen der Schwenkhebel in anderer Weise, gegebenenfalls mittelbar durch die Auslöseeinheit, betätigt wird.

Der Schwenkbereich des Schwenkhebels ist verhältnismäßig klein, durch die Verschwenkbewegung wird erreicht, daß die Dichtklappe eine Öffnung für den Durchfluß von Medium oder die Steuerung eines Druckes freigibt oder verschließt. Trotzdem ist eine Schwenkachse angeordnet, die bei der Erfindung geschickterweise im Bereich der Dichtung angeordnet ist. Durch eine solche Anordnung wird die mechanische Beanspruchung der Dichtung im Bereich der bei einer Verschwenkbewegung stillstehenden Schwenkachse möglichst gering gehalten.

In einer weiteren Variante der Erfindung wird vorgeschlagen, daß die Schwenkachse zwischen Dichtsitz und Auslöseeinheit angeordnet ist. Durch eine solche Anordnung wird eine kompakte Bauform erreicht, da mit den Gesetzmäßigkeiten des Hebels hier in idealer Weiser gespielt werden kann. Die Ansteuerung erfolgt auf einer Seite der Schwenkachse durch die Auslöseeinheit und bewirkt eine entsprechende Bewegung auf der anderen Seite der Schwenkachse am Dichtsitz. In der erfindungsgemäßen Variante wird eine große Flexibilität der Erfindung erreicht, da es prinzipiell möglich ist, durch einen sehr geringen Hub der Auslöseeinheit einen verhältnismäßig großen Verschwenkbereich des Dichtsitzes bei kompakter Ausgestaltung des gesamten erfindungsgemäßen Ventiles zu realisieren.

Erfindungsgemäß wird vorgeschlagen, daß sich der Schwenkhebel im Wesentlichen rechtwinklig zur Schwenkachse erstreckt und der Schwenkhebel bei einer Bewegung der Dichtklappe Bereiche der Dichtung komprimiert. Der Dichthebel durchdringt bei dieser Anordnung die Dichtung. Aufgrund des Verschwenkwinkels des Hebels in der Dichtung erfolgt in der Dichtung eine entsprechende Komprimierung der Dichtung, die von der Elastizität des Dichtungsmaterials aufgenommen wird. Gleichzeitig wirkt die Dichtung hier aber auch als elastisches, rückstellendes Element gegen die Bewegung der Auslöseeinheit und bewirkt bevorzugt natürlich eine Ausrichtung des Hebels in eine kräftefreie Mittelstellung.

Insbesondere in Anwendungen, bei welchen es auf eine Steuerfunktion des Ventiles ankommt, kann es günstig sein, daß der Hebel beidseitig je einen Dichtsitz trägt. Hieraus wird erreicht, daß, je nach Stellung der Auslöseeinheit, die eine oder andere Seite des Hebels zum Abdichten eines Zu- oder Abflusses und so weiter dient, wobei natürlich an den jeweiligen Seiten ein Dichtsitz vorgesehen ist.

Es ist günstig, daß die Auslöseeinheit und der Ventilkörper modular ausgebildet sind. Dies hat insbesondere den Vorteil, daß die Auslöseeinheit leicht austauschbar und an die jeweiligen Einsatzzwecke, insbesondere Betriebsdrücke und so weiter, anpaßbar ist. Da der Ventilkörper als getrenntes Modul dicht ausgebildet ist, kann hierauf ein Baukastenprinzip begründet werden, wodurch sich der Einsatzbereich des erfindungsgemäßen Ventils erheblich erweitert.

Vorteilhafterweise ist vorgesehen, daß die Auslöseeinheit als Elektromagnet oder Elektromotor ausgebildet ist. Diese Antriebskonzepte für die Auslöseeinheit sind hinlänglich bekannt und sehr bewährt und günstig herstellbar. Alternativ hierzu ist es vorgesehen, daß das erfindungsgemäße Ventil auch manuell geschaltet werden kann, wobei dann als Auslöseeinheit die Hand dient.

In einer weiteren Ausführungsform der Erfindung ist vorgesehen, daß die Auslöseeinheit als Elektromagnetantrieb ausgebildet ist und der Hebel einen hiermit zusammenwirkenden Permanentmagneten trägt. An Stelle eines mechanisch wirkenden Antriebes für den Hebel wird bei dieser Variante ohne außenliegenden Hebel eine Kraft auf den Dichtsitz eingeprägt. Auch eine solche Anordnung wird im Rahmen der Erfindung als das Zusammenwirken der Auslöseeinheit mit dem Hebel angesehen.

Günstigerweise wird vorgesehen, daß die Auslöseeinheit ein sich translatorisch oder rotatorisch bewegendes Element aufweist, welches auf den Hebel wirkt. Ein translatorisch wirkendes Element kann dabei zum Beispiel der Anker eines Elektromagneten sein. Ein rotatorisch bewegendes Element wäre zum Beispiel ein drehbar gelagerter Klappanker, der aufgrund mechanischer Kräfte bewegbar ist.

Es ist günstig, daß der Hebel oder das Element eine Langloch- oder Gabelführung aufweist. Da unter Umständen eine translatorische Bewegung des Elementes in eine Schwenkbewegung des Hebels umzusetzen ist, müssen entsprechende Ausgleiche bei der Bewegung vorgesehen werden, was bei der Langlochführung beziehungsweise Gabelführung in einfacher Weise möglich ist. Dabei ist das Führungselement wahlweise entweder am Hebel oder am Element realisierbar.

Erfindungsgemäß werden für die Verbindung zwischen dem Element und dem Hebel mehrere Varianten vorgeschlagen. Zunächst ist es möglich, eine starre Verbindung zwischen Element und Hebel zu wählen, was dazu führt, daß eine Bewegung der Auslöseeinheit über dessen Element sogleich zu einer Bewegung des Hebels und somit zu einer Reaktion des Ventils aufgrund der Bewegung des Dichtsitzes bezüglich des Ein- beziehungsweise Auslasses des Mediums führt. Oftmals ist eine solche Anordnung insbesondere bei schnell schaltenden Ventilen gewünscht, wo eine kurzfristige Ansprechzeit von Bedeutung ist.

In einer anderen, erfindungsgemäßen Variante wird eine schwimmende Verbindung zwischen Element und Hebel vorgesehen, woraus aus der Bewegung des Elementes nicht sofort eine Bewegung des Hebels resultiert. Diese Bewegung erfolgt dann mit einer gewissen Verzögerung. Der Mechanismus ist dabei so gewählt, daß bei einer entsprechenden Ansteuerung der Auslöseeinheit (zum Beispiel eines Elektromagneten) zunächst das Element bewegt und beschleunigt wird und erst nach einem gewissen Freilauf beziehungsweise Freihub das Element den Hebel mitnimmt. Unterstellt man eine Beschleunigung des Elementes bei Beaufschlagung der Auslöseeinheit, so trifft das Element mit einem höheren Impuls beziehungsweise mit höherer kinetischer Energie auf den Hebel und kann diesen mit einem größeren Impuls zum Beispiel aus seiner Schließ- oder Öffnungsstellung heraus bewegen. Diese Funktionsweise ist im Sinne der Erfindung auch als Teleskopankerprinzip beschrieben und erläutert.

Für die Begrenzung der Bewegung des Hebels ist am Dichtklappenkanal mindestens eine Anschlagfläche vorgesehen. Dabei wirkt der Hebel mit entsprechenden Hebelflächen mit diesen Anschlagflächen zusammen. Durch die Ausgestaltung der Hebelfläche einerseits und/oder der Anschlagfläche andererseits ist es möglich, die Steuercharakteristik des Ventils zu beeinflussen. Neben einer Variation der Form ist aber auch vorgesehen, daß die Lage der Anschlagfläche beziehungsweise der Hebelfläche bezüglich des Ventilkörpers beziehungsweise der Dichtklappe einstellbar und veränderbar ist, wodurch die Schaltpunkte zum Beispiel für Einstellzwecke veränderbar sind. Durch die erfindungsgemäße Variante werden daher entsprechende Freiheitsgrade zur Einstellung geschaffen.

Neben diesen Vorteilen wird aber auch erfindungsgemäß vorgeschlagen, daß durch ein Anliegen des Hebels an der Anschlagfläche der Hebel unter eine mechanische Vorspannung gesetzt ist. Hierzu wird unter Umständen auch die Elastizität des Hebels ausgenützt und dadurch zum Beispiel eine Vorspannung auf den Hebel beziehungsweise auf den Dichtsitz realisiert. Hierdurch ist es möglich, den mechanischen Kraftübertrag im Dichtklappenkanal zu variieren beziehungsweise auch auszunützen. Diese mechanische Vorspannung kann zum Beispiel bei der Schließ- oder Öffnungsbewegung ausgenützt werden.

In gewissen Anwendungsfällen ist es auch günstig, wenn das erfindungsgemäße Ventil eine Feder aufweist, gegen dessen Federkraft die Auslöseeinheit auf die Dichtklappe wirkt. Dabei kann diese Feder entweder in der Auslöseeinheit oder auch im Ventilkörper, zum Beispiel zur Abstützung der Dichtklappe in der Ventilkammer vorgesehen sein. Diese Federkraft bewirkt ein rückstellendes Moment entgegen der Kraftentwicklung der Auslöseeinheit. Natürlich ist es auch möglich diese Federn so anzuordnen, daß in einer Nullstellung die Dichtklappe in einer Mittelstellung angeordnet ist. Dies ist zum Beispiel bei zweiseitig wirkenden Dichtklappen (auf dem Hebel sitzt vorder- und rückseitig je ein Dichtsitz) von Bedeutung.

Die Dichtklappe beziehungsweise der Dichtsitz oder auch die Dichtung sind zum Beispiel aus Elastomeren wie EPDM oder Silikon hergestellt. Es ist aber auch möglich, einen aus Metall gebildeten Dichtsitz zu realisieren. Die Elastizität des Materials des Dichtsitzes hilft dabei ein eventuell vorhandenes Ventilspiel auszugleichen.

Der Einsatzbereich des erfindungsgemäßen Ventils ist sehr vielfältig. Es wird vorgeschlagen, daß Ventil als Druckregelventil, Druckbegrenzungsventil, Sitzventil, Wechselventil, Servoventil, Umschaltventil, Wegventil oder Proportionalventil auszubilden beziehungsweise einzusetzen. Gerade der Einsatz der Erfindung bei einem Servoventil hat erhebliche Vorteile. Ventile die mit dem Servoprinzip ausgestattet sind, funktionieren dabei derart, daß diese Ventile den Druck des jeweiligen Mediums nutzen, um dadurch die Öffnungs- beziehungsweise Schließbewegung zu unterstützen. Allerdings ist bei diesem Funktionsprinzip der Servoansteuerung das Druckstoßverhalten stark abhängig von der Geometrie im Strömungs- beziehungsweise Schließbereich. Da es zu übermäßigen Druckstößen in den Zuleitungen kommt, werden bei den Servoprinzipien Bypaßbohrungen mit sehr geringen Durchmessern vorgesehen. Es ergibt sich nach dem Stand der Technik eine entsprechende Empfindlichkeit gegen Verschmutzung. Für eine sichere Steuerung gerade für Servoventile ist es notwendig, daß auch bei schwankendem Druckstoßverhalten eine sichere zuverlässige Funktionsweise des Ventils erreicht wird, wobei umgekehrt der Aufwand für die Auslöseeinheit, insbesondere für dessen Kraftentwicklung, nicht zu groß sein sollte.

Der Einsatz der Erfindung gerade bei Servoventilen erlaubt es, die Ausgestaltung eines Servoventiles unabhängig von der Geometrie im Strömungsbereich zu gestalten und dadurch einen Einsatz der möglichen Bypaßleitungen zu vermeiden, wodurch die Verschmutzungsgefahr eliminiert ist. Um ausreichende Kräfte aufzubauen, wird auf bewährte einfache mechanische Mittel, nämlich die Hebelanordnung zurückgegriffen. Dabei wird, wie beschrieben, von der speziellen Anordnung der Schwenkachse zwischen dem Dichtstücksitz und der Auslöseeinheit ein platzsparendes und trotzdem zuverlässig funktionierendes Ventil zur Verfügung gestellt.

Die Einfachheit der Ausgestaltung des Ventils eignet sich aber auch dazu, dieses zum Beispiel in Sitzventilen, Umkehrventilen oder Proportionalventilen wie auch in Druckregelventilen oder Druckbegrenzungsventilen einzusetzen.

Günstigerweise ist vorgesehen, daß im Ventil entsprechende Vorspannelemente für die Dichtklappe angeordnet sind, wodurch sich das zur Verfügung stehende Kraftpotential gerade beim Schaltvorgang entsprechend erhöhen läßt.

Die Erfindung beschränkt sich dabei nicht nur auf ein Ventil, das wie beschrieben ausgestaltet ist und gegebenenfalls nur mit einem Dichtsitz ausgestattet ist, sondern erstreckt sich auch auf Ventilblöcke, die aus zum Beispiel mindestens zwei Ventilen wie beschrieben ausgebildet sind. Die Einfachheit des dichtenden Elementes und die hohe Flexibilität in dessen Anschluß, aufgrund der beliebig ausstaltbaren Verbindungsstelle zwischen dem Hebel und dem Element der Auslöseeinheit, eröffnet einen großen Einsatzbereich. Mit dem erfindungsgemäßen Ventil ist es möglich, erfindungsgemäße Ventilblöcke zu realisieren, die sehr komplexe Schaltaufgaben realisieren.

Des Weiteren bezieht sich die Erfindung auf einen Ventilblock, welcher zum Beispiel aus zwei Ventilen besteht, wobei mindestens eine Auslöseeinheit vorgesehen ist und zumindest die Dichtklappe eines Ventils von der Auslöseeinheit betätigt wird und die Dichtklappe in einer Ventilkammer des Ventils beziehungsweise Ventilblocks aufgrund der Stellung der Auslöseeinheit positionierbar ist und zumindest eine Dichtklappe einen mit der Auslöseeinheit zusammenwirkenden Hebel aufweist und der Hebel mindestens einen Dichtsitz aufweist. Gerade für komplexere Schaltanwendungen, also zum Beispiel bei Umschalt- oder Steuerventilen ist es günstig, mehrere Ventile miteinander zu kombinieren. Diese Einzelventile müssen dabei nicht zwingenderweise gleichartig ausgebildet sein, es reicht dabei aus, wenn zum Beispiel ein Ventil dieses erfindungsgemäßen Ventilblockes wie beschrieben ausgebildet ist und das andere Ventil eine andere Form besitzt. Dies kann den jeweiligen Anwendungsfällen angepaßt werden und diesen überlassen werden.

Genauso wie bei der Ausgestaltung des Ventiles ist auch bei der erfindungsgemäßen Ausgestaltung des Ventilblockes die Anordnung so, daß der Dichtsitz in der Regel einen entsprechenden Druchlaß verschließt oder freigibt, entsprechend der Stellung der Auslöseeinheit. Diese Grundfunktionalität ist das Wesen eines Ventils und kann in geeigneter Weise in den verschiedenen Schaltprinzipien Verwendung finden.

Des Weiteren schlägt die Erfindung vor, daß zumindest zwei Ventile baugleich ausgestaltet sind, wobei insbesondere zwei Ventile je eine Dichtklappe besitzen und die Dichtklappe je einen einen Dichtsitz tragenden Hebel aufweist. Unter baugleich wird in diesem Zusammenhang verstanden, daß gegebenenfalls das gleiche Prinzip zum Einsatz kommt. Der Begriff baugleich hat dabei aber nicht eine so beschränkende Auslegung, daß es auf die exakt gleiche Abmessung ankommt. Dem Fachmann ist es klar, auch Ventilblöcke nach der Erfindung zu gestalten, deren einzelne Ventile entsprechend ihrem Anwendungsfall oder nach anderen Kriterien unterschiedlich bemaßt sind. Günstig ist es dabei, daß die Ventile mit entsprechenden Ansteuerhebeln beziehungsweise Dichtklappen ausgestattet sind, um ein einheitliche Betätigung zu erlauben. Neben dieser baugleichen de facto identischen Ausgestaltung, sind natürlich auch Varianten von der Erfindung umfaßt und gedeckt, die eine nicht exakt baugleiche Ausgestaltung aufweisen, aber doch einen entsprechenden Hebelanschluß besitzen und die Vorzüge der Erfindung, nämlich insbesondere die gemeinsame Ansteuerbarkeit von einer Auslöseeinheit auszunutzen. Dieser Vorteil wird bereits dann realisiert, wenn eine Dichtklappe zum Beispiel nach dem erfindungsgemäßen Ventil mit einem anderen, mit einem Hebel betätigbaren Ventil gekoppelt wird, oder zwei mit einem Hebel ausgestattete, aber sonst beliebig ausgebildete Ventile vorgesehen sind.

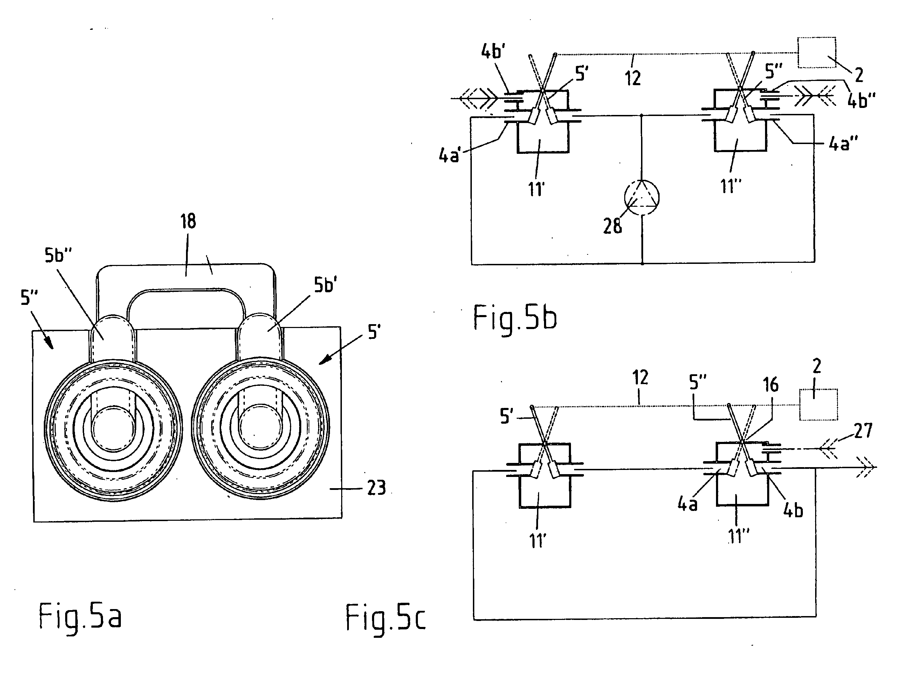

In einer bevorzugten Ausgestaltung des erfindungsgemäßen Ventilblockes wird vorgesehen, daß die Hebel der Dichtklappen durch einen Hebelverbinder, insbesondere fest miteinander verbunden sind. Mit einer solchen Ausgestaltung wird die Auslöseeinheit geschickterweise mehrfach verwendet. Die Steuerstellungen der verschiedenen Ventile sind zueinander festgelegt. Auch eine "schwimmende" Kopplung der Hebel gehört zur Erfindung. Aufgrund eines entsprechenden Hydraulik- oder auch Pneumatikschemas (siehe hierzu Fig. 5b und 5c) verbunden. Durch geschickter Ausnutzung der einander entgegengerichteten Kräfte beziehungsweise Drücke können komplexe Steueraufgaben mit geringen Kräften und geringen Energieaufwand durch die Auslöseeinheit realisiert werden. Dieser Vorteil wird im Übrigen nicht nur mit einem erfindungsgemäßen Ventil im Ventilblock realisiert, sondern bei geschickter Realisierung auch bei anderen, nach dem Klappenventilprinzip funktionierenden Ventilen. Insofern behält es sich der Anmelder vor, für diesen Teil der Erfindung auch eigenständigen Schutz zu beanspruchen.

Des weiteren wird für den erfindungsgemäßen Ventilblock vorgeschlagen, daß der Dichtsitz zumindest teilweise von einer Dichtung umgeben ist. Die vorteilhafte Ausgestaltung eines Ventiles, wie beschrieben, wurde bereits im Zusammenhang mit dem erfindungsgmäßen Ventil ausgeführt. An dieser Stelle wird betont, daß natürlich alle Merkmale im Zusammenhang mit dem erfindungsgemäßen Ventil beschrieben worden sind und auch für den erfindungsgemäßen Ventilblock bestehen, soweit der Ventilblock ein entsprechend ausgestattetes Ventil besitzt. Die Erfindung im Bereich des Ventilblocks ist aber weiter gefaßt und nicht nur auf die spezielle Ausgestaltung des Ventils als Klappenventil, wie beschrieben, beschränkt.

Gemäß der Erfindung kommt es dabei nicht darauf an, daß jedes Ventil eine eigenständige Auslöseeinheit aufweist, was natürlich entsprechend der Steuerungsaufgaben auch möglich ist. Vielmehr ist es aber auch möglich, eine Auslöseeinheit für mehrere Dichtklappen einzusetzen. Die Auslöseeinheit muß daher nicht nur für exakt eine Dichtklappe zuständig sein, sondern kann erfindungsgemäß eine Mehrzahl von Dichtklappen in geeigneter Weise ansteuern. Da insbesondere die Auslöseeinheit unter Umständen sehr aufwendig und kostenintensiv sein kann, bietet es sich an, für komplexere Schaltanwendungen die Auslöseeinheit entsprechend für mehrere Dichtklappen mit zu nutzen.

In einer bevorzugten Variante der Erfindung ist bei einer Ausgestaltung des Ventilblockes vorgesehen, daß die Hebel mindestens zweier Dichtklappen derart verbunden sind, daß eine Schließbewegung der ersten Dichtklappe eine Öffnungsbewegung der zweiten Dichtklappe bewirkt. Bei dem beschriebenen Anwendungsfall steht zum Beispiel eine Dichtklappe unter entsprechendem Druck, diese Dichtklappe würde sich unter diesem Druck bewegen. Die andere Dichtklappe müßte gegen diesen Druck bewegt werden, hierfür wäre entsprechende Kraft aufzuwenden. Durch eine mechanische Kopplung dieser beiden Dichtklappen, zum Beispiel an ihren Hebeln, werden die jeweils anfallenden beziehungsweise freiwerdenden Kräfte entsprechend entgegengesetzt und ausgenützt. Es muß dann nur noch durch die Auslöseeinheit die jeweilige Richtung der Bewegung angestoßen und geführt werden. Im Ergebnis resultiert hieraus auch ein günstiges System, da der Aufwand für die Bewegung der beiden Klappen deutlich geringer wird und daher auch die Auslöseeinheit entsprechend kleiner zu wählen ist.

Des Weiteren schlägt die Erfindung ein mit einer speziellen Dichtklappe aufgebautes Klappenventil vor, welches mit einer Auslöseeinheit verbunden ist, die zum Beispiel einen gedämpften Teleskopanker als Element aktiviert. In dieses Klappenventil ist ein spezielles Dichtelement integriert, wobei durch die Anschlagfläche des Hebels am Dichtelement die Hebeleinstellung optimal fixiert werden kann, um unter anderem mit Hilfe des speziellen Teleskopankers auch einen energiesparenden Effekt zu erzielen und zudem die mechanische Übertragung der Ventilbewegung optimal auszunutzen.

Das in der Erfindung bezeichnete Ventil besteht somit aus einer Auslöseeinheit mit einem gedämpften Teleskopanker, einem Ventilkörper und einer Dichtklappe mit einem speziellen Dichtelement.

Die Auslöseeinheit zeichnet sich nach einer Variante der Erfindung dadurch aus, daß der daran angeordnete gedämpfte Anker nicht direkt mit der Dichtklappe in ständigem Kontakt stehen muß. Sie dient dem Bewegen des am Anschlagbereich gedämpften Teleskopankers, welcher auch manuell oder auf andere Art auf Grund der konstruierten Hebelwirkung leicht in Bewegung gesetzt werden kann. So kann die Auslöseeinheit und der damit verbundene Anker zum Beispiel mit einem kleinen Elektromotor aufgebaut sein. Die Auslöseeinheit und die Ventileinheit sind dadurch als getrennte Baugruppen aufgebaut, was einen einfachen Aufbau des Systems ermöglicht, wobei die Auslöseeinheit zur Erreichung des Hub unterschiedlich ausgestattet sein kann, womit somit die elektrischen Eigenschaften des Ventils modifiziert werden können. Da das in der Erfindung beschriebene Klappenventil auch manuell geschaltet werden kann, ist es auch ohne den gedämpften Teleskopanker funktionsfähig.

Die Dichtklappe ist derart ausgebildet, daß diese über einen Hebel verfügt, auf den die Kraft der Auslöseeinheit wirkt, die zum Beispiel mit Hilfe einer Magnetspule angetrieben wird und die am unteren Ende des Hebels zudem über einen speziellen Dichtsitz oder Stößel mit Dichtsitz verfügt, dieser kann vorzugsweise aus einem Material umspritzt oder hergestellt werden, welches die Dichtheit des Ventils positiv unterstützt - dies sind vorzugsweise Elastomere, wie zum Beispiel EPDM oder Silikone, Metallene Dichtsitze (partiell) können hierzu auch eingesetzt werden.

Die Dichtklappe kann so zum Beispiel mit einer weiteren Dichtklappe kombiniert werden und mit einem zum Beispiel eingebauten und umspritzten Permanentmagnet ohne außen liegenden Hebel in Funktion gebracht werden. Ebenso kann das Ventil mit Hilfe von innen liegenden Federungen, die auf die Dichtklappe wirken, geöffnet und geschlossen werden. Um den Kräfteausgleich herstellen zu können, können zum Beispiel die Federungen gegenseitig in Position gebracht werden.

Nach außen geschlossene Dichtklappen werden vorzugsweise in Hochdruckanwendungen eingesetzt. Wichtig hierbei ist, daß bei zum Beispiel nebeneinander liegenden Dichtklappen, deren Hebel miteinander verbunden sind, die Kräfte entgegengesetzt wirken, so daß der Hebel als äußeres Übertragungselement der inneren Kräfte dient.

Ist die Dichtklappe umspritzt, so reicht die Umspritzung optimal bis zu dem Punkt am Ventilkörper, wo dieser aus dem Ventilkörper austritt. Die Dichtklappe wird fest in den Ventilkörper vorgespannt. Sie erhält ihre Lauf- beziehungsweise Bewegungsfähigkeit unter anderem auch durch die Umspritzung beziehungsweise Herstellung aus Materialien wie zum Beispiel Elastomeren, und aus einem am Ventilkörper im oberen Bereich des Dichtklappenkanals liegenden Freiraums.

Durch den festen Sitz der Dichtklappe im Ventilkörper wird auch die Dichtheit des Ventilkörpers unterstützt. Am unteren Ende der Dichtklappe befindet sich das Ventilschließelement, welches als Ventilklappe bezeichnet wird. Diese Ventilklappe wird von einem ebenfalls vorzugsweise aus Elastomeren hergestellten Ring umgeben, der als äußerer Dichtring bezeichnet wird und der über der Ventilklappe mit der Dichtklappe fest verbunden ist. Die Dichtklappe solllte aus einem festen Material, vorzugsweise aus Metall, hergestellt sein und ist mit einem Elastomer, zum Beispiel EPDM oder Silikon, umspritzt. Bei dem Umspritzungsvorgang kann der äußere Dichtring gleichzeitig mit umspritzt werden. Mit Hilfe dieses äußeren Dichtrings wird unter anderem bewirkt, daß die Dichtheit des Ventils nach außen gegeben ist und daß die Elastizität des Ventilspiels damit ausgeglichen wird. Dieses Ventil kann komplett in einen Werkstoff, so zum Beispiel in Kunststoff oder aus Metall, eingefaßt werden, daß ein Austreten des Mediums, zum Beispiel durch Überdruck, durch den Klappenkanal nicht mehr denkbar ist.

Der Aufbau des Ventilkörpers kann sich in zwei Teile aufteilen, welche vorzugsweise nach dem Einlegen der Dichtklappe fest zusammengesetzt werden - dies kann beispielsweise durch entsprechende Verschraubungen geschehen. Der Aufbau des Ventilkörpers kann auch in einem Teil erfolgen, wobei die Dichtklappe zum Beispiel dann von oben in den Dichtklappenkanal eingesetzt oder komplett eingeschweißt oder umspritzt wird. Wird der Ventilkörper dennoch geteilt, erfolgt die Teilung des Ventilkörpers optimal, so zum Beispiel horizontal, durch den Bereich des Dichtklappenkanals. Somit kann die Teilung des Ventilkörpers zum Beispiel genauso durch die Ventilkammer entlang des Dichtklappenkanals erfolgen. So können jene Ventilkörperteile, durch welche das Medium durchfließt, in allen Laufrichtungen optimal abgedichtet werden, dies geschieht vorzugsweise mit dem Einsetzen von Dichtungen oder Dichtringen.

Die mit dem Dichtmaterial umspritzte Dichtklappe wird in den Dichtklappenkanal eingesetzt und somit in die Ventilkammer mit eingepreßt. Damit nun die Beweglichkeit eines Wechselventils und der Anschlag der Ventilklappe optimal justiert werden kann, enthält der Ventilkörper im oberen Ende des Dichtklappenkanals jeweils einen abgeschrägten Dichtklappenanschlag oder Anschlagfläche, einmal in Laufrichtung des Mediums und einmal in entgegengesetzter Laufrichtung. Dies führt zu einem schnellen, präzisen und kraftreduzierten Umschalten des Ventils.

Durch diesen Dichtklappenkanal erhält die Dichtklappe die Funktion einer mechanischen Kraftübertragung, welche die Verschlußkraft des Ventils unterstützt und zudem wird der mechanische Anschlag des Ventils immer mit optimaler Kraft an den entsprechenden Durchflußkanälen des Mediums anliegen, ohne einem unnötigen Materialverschleiß an der Ventilklappe zu unterliegen. Dadurch, daß der Ventilkörper und die Dichtklappe selbst über entsprechende Abdichtungen verfügen, arbeitet das Ventil sehr sauber und es kann auch bei sehr hohem Durchlaufdruck oder Ruhedruck problemlos zum Einsatz kommen. Zur Erreichung des Servoprinzips beziehungsweise zur Unterstützung des Servoprinzips können die Durchflußkanäle entsprechend der Laufrichtung des Mediums verschiedene Durchmesser aufweisen.

Durch den einfachen Aufbau des Ventils ist es nun ohne weiteres möglich, aus einem einfachen Durchflußventil, bei welchem ein Medium von Laufrichtung A nach Laufrichtung B durchströmt, die Laufrichtung von Laufrichtung von Laufrichtung B nach Laufrichtung A zu ändern. Dies geschieht lediglich durch die Änderung der Laufrichtung des Durchflußdrucks.

Zudem ist es anhand der Erfindung problemlos möglich, ein Ventil mit einem zweiten, gleichartigen Ventil zu kombinieren, um dadurch zum Beispiel einen Druckausgleich beim Mediumdurchfluß oder eine Mischung von verschiedenen Medien zu bewirken. Dies erfolgt vorzugsweise damit, daß die zwei Dichtklappen am oberen Ende durch eine Verbindung als eine Einheit zusammengesetzt werden.

Es ist dabei günstig, daß die miteinander verbundenen Hebel der Dichtklappen die notwendige Stärke und die notwendige Härte aufweisen. Es ist vorstellbar, daß gleichzeitig zum Beispiel nicht nur zwei, sondern drei, vier oder zehn (beziehungsweise beliebig viele) Ventile über eine Auslöseeinheit in Bewegung gesetzt werden können und daß hierbei die Zwischenschaltung der einzelnen Ventile zum Beispiel zur Mischung von verschiedenen Medien erreicht wird.

Das erfindungsgemäße Klappenventil mit den gekennzeichneten Merkmalen des Hauptanspruchs hat den Vorteil, daß durch den Grundaufbau ein schnell schaltendes Klappenventil mit mindestens einfacher, jedoch unendlich erweiterbarer, kombinierter Ventilfunktionen entsteht, welches durch den mechanischen Anschlag unter einfachstem Aufbau (Ventilblock) eine Mehrfachdichtung der Kanäle erwirkt.

Derartige, nach außen geschlossene Dichtklappen können vorzugsweise als Druckregelventile beziehungsweise als Druckbegrenzungsventile eingesetzt werden, wobei mittels der beschriebenen Federn auf den Dichtsitzen die Schaltdrücke vorgegeben werden.

Der im erfindungsgemäß beschriebenen Ventil vorgesehene Hebel benötigt zum Beispiel auch aufgrund der abgeschrägten Seitenwände des Dichtklappenkanals hierbei einen geringen Kraftaufwand zur Erzielung der Wirkung. Somit handelt es sich um eine Art Servoventil, welches in einen Ventilblock eingearbeitet ist, durch dessen Aufbau dies auch als Umschalt- beziehungsweise Wechsel- oder Mischventil verwendet werden kann, weil eine deutlich geringere Verschmutzungsempfindlichkeit gegenüber herkömmlichen Ventilen entsteht und eine schnelle Ventilöffnung/-schließung erwirkt werden kann.

Bei Mehrfachschaltung nebeneinander liegender gleichartiger Ventile wird das Servoprinzip mit Hilfe von gegenseitig anliegenden Drücken auf den Dichtklappen mit Hilfe des dabei entstehenden internen Gegendrucks durch Druckausgleich unterstützt. Durch diese Eigenschaft des internen Druckausgleichs ist es möglich, Auslöseeinheiten kleiner Baugrößen einzusetzen, da nur geringe Auslösekräfte auftreten. Das Servoprinzip dient dabei unterstützend für die Ventildurchflußeigenschaften, es ist jedoch nicht Bedingung für die Funktionsfähigkeit der Ventilfamilie. Damit funktioniert das Ventil auch ohne Ausnutzung des Durchlaufdrucks problemlos. Ebenfalls kann durch diesen Aufbau ein strömungstechnisch optimiertes Ventil erstellt werden, bei dem die Verschmutzungsempfindlichkeit gegenüber Servoventilen deutlich reduziert ist. Dies ist vor allem im Umgang mit Lebensmitteln, wie zum Beispiel Getränken, oder im Umgang mit anderen Fluiden oder Festkörpern (zum Beispiel Pulvergranulat) von Vorteil. Ein damit verbundener großer Vorteil dieser Erfindung ist somit, daß zum Beispiel in den Strömungsbereich keine Metallteile, die für Oxidation sorgen können, in direkten Kontakt mit dem Medium kommen.

Mit dem erfindungsgemäßen Ventil ist man nach dem Einbau des Umschaltventils unabhängig von der Laufrichtung des Mediums, da die Laufrichtung jederzeit mit Hilfe der Position der Ventilklappe geändert werden kann.

Ein weiterer großer Vorteil ist, daß ein schnell schaltendes Ventil durch den Teleskopaufbau des Hubankers erreicht wird. Dadurch wird ein sehr genau und sehr schnell schaltendes Ventil aufgebaut, mit dessen Hilfe der Durchfluß und/oder die Durchflußmenge sehr genau dosiert werden kann.

Oben genannter Vorteil unterstützt auch die Ventillaufeigenschaft, wenn zum Beispiel ein Ventil erweitert wird auf zum Beispiel zwei, drei, vier oder mehr Ventilkammern, welche zum Beispiel nebeneinander jeweils mit kombinierten Dichtklappen oder zum Beispiel auch hintereinander mit verbundenen Hebeln geschaltet sind. Auch ein übereinander Liegen von Durchflußkammern, die lediglich nur durch eine Dichtklappe zum Beispiel wechselweise oder zum Beispiel gleichzeitig geöffnet beziehungsweise geschlossen werden, ist mit diesem Ventil möglich.

Das erfindungsgemäße Ventil mit dem speziellen integrierten Ventilkörper kann mit unterschiedlichen Auslöseeinheiten ausgestattet werden, so daß man mit einfachen Mitteln den Hub und damit die elektromechanischen Eigenschaften des Klappenventils modifizieren kann, hierin liegt ebenfalls ein großer Vorteil dieses Ventils gegenüber den herkömmlichen.

Bei herkömmlichen Ventilen sind beim Einsatz eines Klappenventils in Hochdruckleitungen entweder leistungsfähige Magnete zur Ventilöffnung/-schließung notwendig, welche entsprechend groß zu bauen sind, oder aber, daß wie in der Erfindung dargestellt, das Teleskopankerprinzip integriert ist. Bei diesem Teleskopankerprinzip wird die Dynamik des Ankers, welcher zu Beginn der Bestromung frei beweglich ist - also ohne direkte Verbindung zu dem Auslöseelement ist - ausgenutzt. Sobald der frei bewegliche Anker (dies entspricht der schwimmenden Verbindung) auf Anschlag zu der eigentlichen Klappenauslösung kommt, ist der Impuls des Ankers so hoch, daß ein Öffnen der Klappendichtung gegen den statischen Druck erfolgt. Der Vorteil eines solchen Systems ist, daß Hubmagnete mit relativ kleiner Bauweise eingesetzt werden können. Zur Optimierung der Schaltgeschwindigkeiten können hierbei die magnetischen Flußbauteile mit einfachen Mitteln angepaßt werden.

Des Weiteren ist es möglich, daß die Lage der Auslöseeinheit beziehungsweise des Elektromagneten bezüglich des Ventiles variiert werden kann, wodurch sich die Anzugsdynamik und/oder der Ankerhub verändern läßt. Dies wird dadurch realisiert, daß eine Verstelleinrichtung vorgesehen ist, durch die die Auslöseeinheit bezüglich der Ventileinheit justierbar ist.

Da die Ventileinheit und die Auslöseeinheit als getrennte Vormontagebaugruppe aufgebaut sind, entsteht hierbei ein einfacher Aufbau des Systems. Ein weiterer Vorteil der Erfindung ist, daß mit Hilfe der Erfindung die Möglichkeit geschaffen ist, ein montage- und wartungsfreundliches System aufzubauen, bei welchem sämtliche hydraulischen Funktionselemente in einer vormontierten Ventileinheit integriert sind. Auf diese Weise ist es möglich, auch manuell betätigte Ventile mit diesem Aufbau darzustellen.

Durch die in den Unteransprüchen aufgeführten Beschreibungen sind vorteilhafte Weiterbildungen und Verbesserungen des im Hauptanspruch angegebenen Ventils möglich.

Die Erfindung ist schematisch in der Zeichnung gezeigt. Es zeigen:
- Fig. 1: den Schnitt durch die Auslöseeinheit des erfindungsgemäßen Ventils;
- Fig. 2a, 2b, 2c: die Dichtklappe des erfindungsgemäßen Ventils mit äußerem Dichtring im Querschnitt (Fig. 2a) und in Ansicht (Fig. 2b) sowie in perspektivischer Darstellung (Fig. 2c);
- Fig. 3a, 3b, 3c: den Ventilkörper des erfindungsgemäßen Ventils im Querschnitt (Fig. 3a) sowie in geteilter perspektivischer Ansicht (Fig. 3b und Fig. 3c);
- Fig. 4a, 4b: das erfindungsgemäße Ventil in Frontansicht (Fig. 4a) und im Querschnitt (Fig. 4b);
- Fig. 4c: das erfindungsgemäße Ventil in perspektivischer Ansicht;
- Fig. 5a: die Ansicht eines erfindungsgemäßen Ventils mit zwei nebeneinander liegenden Durchflußkammern;
- Fig. 5b: einen hydraulischen Schaltplan für das Umschaltprinzip nach der Erfindung;
- Fig. 5c: zeigt einen hydraulischen Schaltplan für das Servoprinzip nach der Erfindung;
- Fig. 6: eine perspektivische Ansicht des erfindungsgemäßen Ventilblockes und
- Fig. 7: zeigt eine perspektivische Ansicht von nebeneinander und gleichzeitig hintereinander liegenden erfindungsgemäßen Ventilen in einem erfindungsgemäßen Ventilblock.

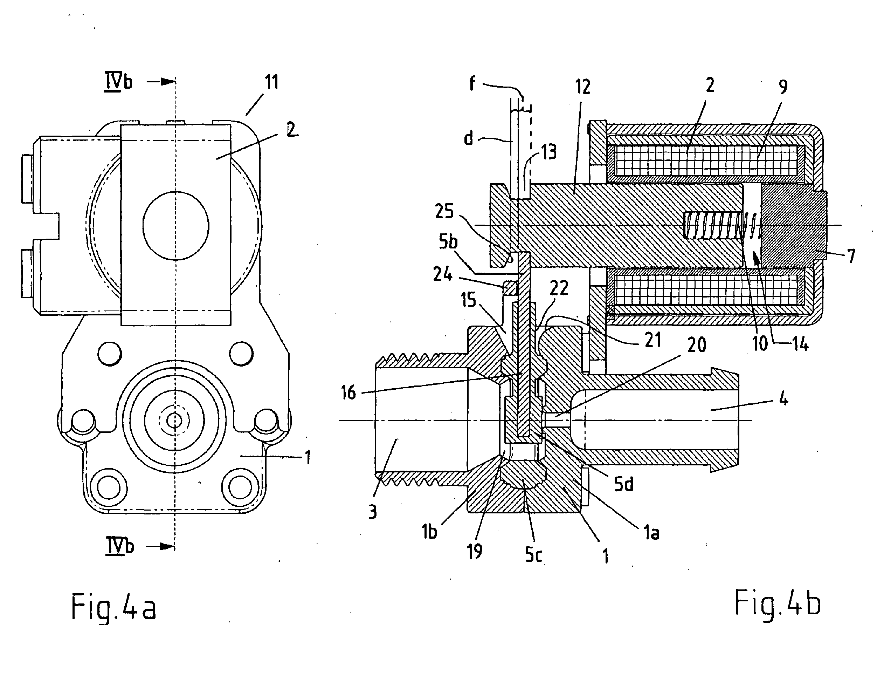

Das erfindungsgemäße Ventil 11 erschließt sich am übersichtlichsten aus Fig. 4b. Die Fig. 4b zeigt einen vertikalen Schnitt durch das Ventil 11, welches im Wesentlichen (vergleiche Fig. 4a) aus der Auslöseeinheit 2 und dem Ventilkörper 1 besteht.

Die Auslöseeinheit 2 weist ein Element 12 auf, welches mit dem Hebel 5b der Dichtklappe 5 zusammenwirkt.

Die Dichtklappe 5 wird durch Element 12 derart angesteuert, daß letztendlich der Dichtsitz 5d am Ventilkörperauslaß 4 den Durchlaß 20 verschließt oder öffnet. Die Anordnung ist dabei so gewählt, daß in der gezeigten, entspannten Stellung, bei welcher die Feder 10 das Element 12 vom Kern 7 weg nach links bewegt, der Dichtsitz 5d den Durchlaß 20 versperrt, das Ventil 11 also geschlossen ist. Wird nun die Spule 9 mit Strom beaufschlagt, so wird das Element 12 zur Überbrückung des Luftspaltes 14 nach rechts gezogen, wodurch dann der obere Teil des Hebels 5b der Dichtklappe 5 in Uhrzeigerrichtung geschwenkt wird, wodurch sich der Dichtsitz 5d vom Durchlaß 20 entfernt und diesen für einen Durchfluß freigibt. Dabei ist zu beachten, daß der Hebel 5b um eine Schwenkachse 16 schwenkbar gelagert ist und so diese Kipp- oder Klappbewegung ausführt.

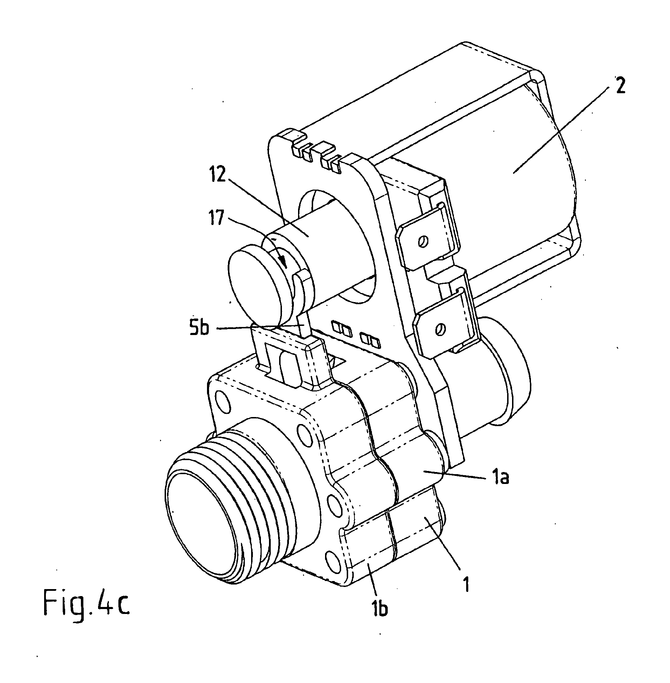

Die Anordnung ist dabei so gewählt, daß das Element 12 an seinem, dem Hebel 5b zugewandten Ende eine Ringnut 13 oder einen Einstich 13 aufweist. In diese Ringnut 13 steht das gabelartige Ende 17 des Hebels 5b gelenkig ein (vergleiche Fig. 4c).

Zum Zeitpunkt der Strombeaufschlagung der Spule 9 besteht noch keine feste Kopplung zwischen dem Element 12 und dem Hebel 5b. Die Anordnung ist "schwimmend". Das wirkende Magnetfeld der Magnetspule 9 beschleunigt das Element 12 nach rechts und überbrückt den Luftspalt 14.

Der Hebel 5b ist deutlich dünner als die Breite f der Ringnut 13. Es ergibt sich daher ein Freihub d. Erst wenn das Element diesen Freihub d überwunden hat, liegt die Steuerkante 25 der Ringnut 13 an dem oberen Ende des Hebels 5b an und bewegt diesen mit. Dieses Konstruktionsprinzip wird im Sinne der Erfindung auch als Teleskopankerprinzip beschrieben und noch mehrfach entsprechend erläutert.

Das erfindungsgemäße Ventil besteht im Wesentlichen aus der Dichtklappe 5, der Auslöseeinheit 2 und dem Ventilkörper 1.

Der in Fig. 4b gezeigte Ventilkörper 1 besteht dabei geschickterweise aus zwei Ventilkörperteilen 1a und 1b, gemäß der Erfindung können dies aber auch mehr als nur zwei Ventilkörperteile sein.

Die Anordnung ist dabei so gewählt, daß das rechte Ventilkörperteil 1a den Auslaß 4 bildet und das linke Ventilkörperteil 1b den Einlaß 3.

Die beiden Ventilkörperteile 1a, 1b nehmen zwischen sich die Dichtklappe 5 auf. Des Weiteren bilden die beiden Ventilkörperteile 1a, 1b die Ventilkammer 19. Die Ventilkammer 19 ist dabei der Bereich, in welchem der Dichtsitz 5d angeordnet ist, welcher den Durchlaß 20 öffnet und schließt beziehungsweise steuert.

Das Ausbilden des Ventilkörpers 1 mit zwei zusammengesetzten Ventilkörperteilen 1a, 1b bietet Vorteile bei der Herstellung des Ventilkörpers. Allerdings sind die Nahtstellen entsprechend abzudichten, jedoch wird hierzu in geschickter Weise ebenfalls die Erfindung in einer Variante wie beschrieben eingesetzt.

Die Dichtklappe 5 besitzt einen Hebel 5b an dessen unterem Ende der Dichtsitz 5d angeordnet ist. Der Dichtsitz 5d ist zumindest teilweise von einer Dichtung 5c umgeben. Die Dichtung 5c ist dabei als Ringdichtung ausgebildet, der Hebel 5b durchdringt die Dichtung 5c.

Die Dichtung 5c dichtet nun den Spalt zwischen den beiden Ventilkörperteilen 1a, 1b ab. Bei einer Montage der beiden Ventilkörperteile 1a, 1b werden diese derart gegeneinander gedrückt, daß die sich dazwischen befindliche Dichtung 5c zuverlässig abdichtet. Gleichzeitig ist damit die Dichtklappe 5 montiert und ausgerichtet und auch ausreichend festgelegt. Dabei ist es wiederum günstig, daß das Material der Dichtung 5c eine gewisse Elastizität aufweist, wie sie eben für Dichtungen typisch ist, wobei aber jetzt diese Materialeigenschaft auch in anderer Weise ausgenützt wird, nämlich daß dieses Material auch eine gewisse Elastizität aufweist, woraus eine Beweglichkeit des Hebels 5b folgt die zur Ausbildung der Schwenkachse 16 führt. Dabei ist die Lage der Schwenkachse 16 natürlich variabel und letztendlich abhängig von den genauen konstruktiven Bedingungen, sie kann also etwas variieren gegenüber dem in Fig. 4b angegebenen Ort, die Achse ist typischerweise als das stillstehende Element bei einer Rotation zu beschreiben.

Da der Hebel 5b durch das Element 12 bewegt wird, die Dichtung 5c aber stillstehend bleibt, erlaubt die Elastizität der Dichtung 5c diese Beweglichkeit.

Gleichzeitig kann diese Elastizität auch für Rückstellbewegungen beziehungsweise Nullstellung und so weiter ausgenützt werden. Gemäß der Erfindung ist auch vorgesehen, entsprechend unterstützende Mittel zur Rückstellung einzusetzten, die hier nicht gezeigt sind.

Um die Schwenkbewegung des Hebels 5b zu ermöglichen, ist in dem Ventilkörper 1 ein Dichtklappenkanal 15 vorgesehen, der trichterartig ausgebildet ist. Dieser Dichtklappenkanal 15 wird zumindest einseitig, gegebenenfalls auch beidseitig von einer Anschlagfläche 21 begrenzt. Bei Nullstellung der Dichtklappe 5 weist der Hebel 5b und dessen mit der Anschlagfläche 21 zusammenwirkende Hebelfläche 22 eine gewisse Beabstandung auf. Diese wird bei Betätigung der Auslöseeinheit verringert beziehungsweise eliminiert, derart, daß die Hebelfläche 22 auf der Anschlagfläche 21 aufliegt. Es ergibt sich dann unter Umständen eine Lageveränderung der Schwenkachse 16. Des Weiteren ist es möglich durch die Ausgestaltung der Anschlagfläche 21, die hier gerundet ausgebildet ist, die Schaltcharakteristik des erfindungsgemäßen Ventils einzustellen. Auch ist es möglich, die Dichtklappe durch das Zusammenwirken der Anschlagfläche 21 und der Hebelfläche 22 entsprechend unter Vorspannung zu setzen, wobei dann gegebenenfalls die Elastizität des Hebels 5b mit ausgenützt wird.

Bei dem in Fig. 4b gezeigten Ventil ist nur ein einfaches Ein/Ausschalten angestrebt. Ein Begrenzungsbügel 24, der auf der der Anschlagfläche 21 gegenüberlegenden Seite des Hebels 5b angeordnet ist, begrenzt die Schwenkbewegung des Hebels 5b in der unbestromten, nur durch die Feder 10 zum Beispiel bestimmten Schließstellung.

In der Schließstellung wird das Servoprinzip ausgenützt, derart, daß der im Einlaß 3 befindliche Staudruck auf der Rückseite des Dichtsitzes 5d diesen auf den Durchlaß 20 preßt.

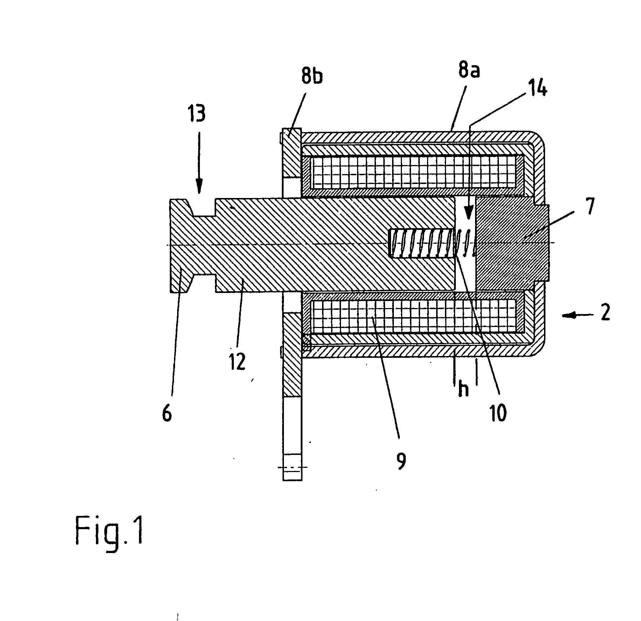

In Fig. 1 wird ein Schnitt durch die Auslöseeinheit 2 mit dem Teleskopanker 6 als Element 12 dargestellt. Im Fall der dargestellten Auslöseeinheit 2 handelt es sich um einen Hubmagneten, welcher aus dem Jochblech-Bügel 8a und der Jochblech-Platte 8b sowie der Spule 9 besteht. Die Spule 9 umgibt dabei das Element 12, wie auch den Kern 7. Der Kern 7 schließt sich an dem in der Spule 9 liegenden Ende des Elementes 12/Teleskopankers 6 an. Der Hub h wird durch den Abstand vom Teleskopanker 6 beziehungsweise dem Kern 7 dargestellt.

Der Teleskopanker 6 hat eine Ringnut 13, die breiter ist als die Dicke des Hebels 5b, damit der Anker 6 einen erforderlichen Freihub d besitzt, bevor der Hebel 5b bei der Bestromung mitgerissen wird, so daß die Dynamik beziehungsweise der Impuls des Ankers 6 für die Öffnung der Ventilklappe ausgenutzt wird. Hierdurch werden deutlich kleinere Hubmagneten benötigt, da der Kraft- beziehungsweise Energiegehalt des Magneten beim Öffnen der Ventilklappe sehr hoch ist. Gleichzeitig wird hier vorzugsweise ein schaltzeitoptimiertes System integriert, welches in diesem Falle nicht kraftoptimiert sein muß. Bei unbestromter Spule wirkt der Teleskopanker auf das Gesamtsystem durch die Federkraft 10 dichtunterstützend. Durch die Bestromung der Spule entsteht eine Kraftwirkung auf den Teleskopanker 6, welcher gegen die Federkraft 10 in Richtung des Kerns 7 gezogen wird. Zu diesem Zeitpunkt ist in dem Bereich des Einstiches ein Freihub entstanden, so daß der Teleskopanker 6 nur gegen die Gegenkraft der Feder 10 ziehen muß. Sobald der Teleskopanker 6 in Kontakt mit der Dichtklappe kommt, beginnt die Klappen-/Kippbewegung des Klappenventils. Zu diesem Zeitpunkt hat der Teleskopanker eine so hohe Energie durch den dynamischen Impuls gewonnen, daß gegen hohe Druckkräfte das Ventil geöffnet werden kann.

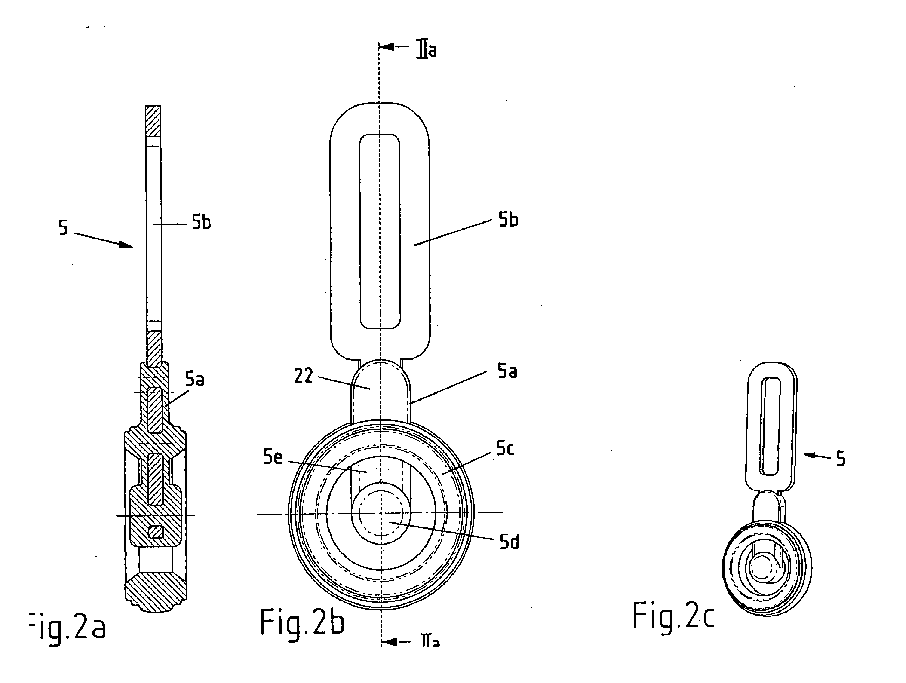

Die Fig. 2 enthält drei Darstellungen der Dichtklappe 5.

Die linke Darstellung in Fig. 2a stellt den Schnitt der Seitenansicht dar. Anhand der Zeichnung kann in diesem Fall der flache Aufbau der Dichtklappe 5 sehr gut dargestellt werden, wobei der Aufbau immer die Stärke dem maximalen Druck, wenn zum Beispiel zwei Ventile nebeneinander geschaltet sind, standhalten muß. Hierbei ist daher auch auf ein entsprechend hartes Material der Dichtklappe zu achten. Es kommt dabei natürlich immer auf den jeweiligen Anwendungszweck der Erfindung an. Das erfindungsgemäße Ventil ist daher sehr variabel einsetzbar und sowohl im Nieder- wie auch im Hochdruckbereich verwendbar.

Die Fig. 2b zeigt die Frontalansicht der Dichtklappe. Im oberen Bereich beginnend befindet sich der Hebel 5b auf welchem die Auslöseeinheit 2 mit dem in Fig. 1 beschriebenen Teleskopanker 6 zum Beispiel optimal im unteren Bereich d des Hebels 5b wirkt. Im mittleren Bereich der Dichtklappe, dem Dichtelement 5a beginnt der Teil des Ventils, welcher gegen das Austreten des Mediums eine Dichtwirkung aufweist und deshalb zum Beispiel eine Umspritzung aus EPDM oder ähnlichen enthält. Dieser Bereich 5a ist auch gleichzeitig die nach außen sichtbare elastische Hebelfläche 22. Der untere Bereich es Hebels 5b bildet den Dichtstößel 5e, dieser sitzt in der Mitte des äußeren Dichtrings 5c, beide Elemente sind ebenfalls vorzugsweise mit einem elastischen und abdichtenden Material herzustellen, damit die Ventileigenschaften optimal unterstützt werden.

Die Fig. 2c zeigt die Dichtklappe von einer schrägen Draufsicht. Hierbei ist zu erkennen, daß der Dichtstößel 5d eine größere Stärke aufweist und daß der Dichtring 5c ebenfalls dementsprechend stärker aufgebaut ist.

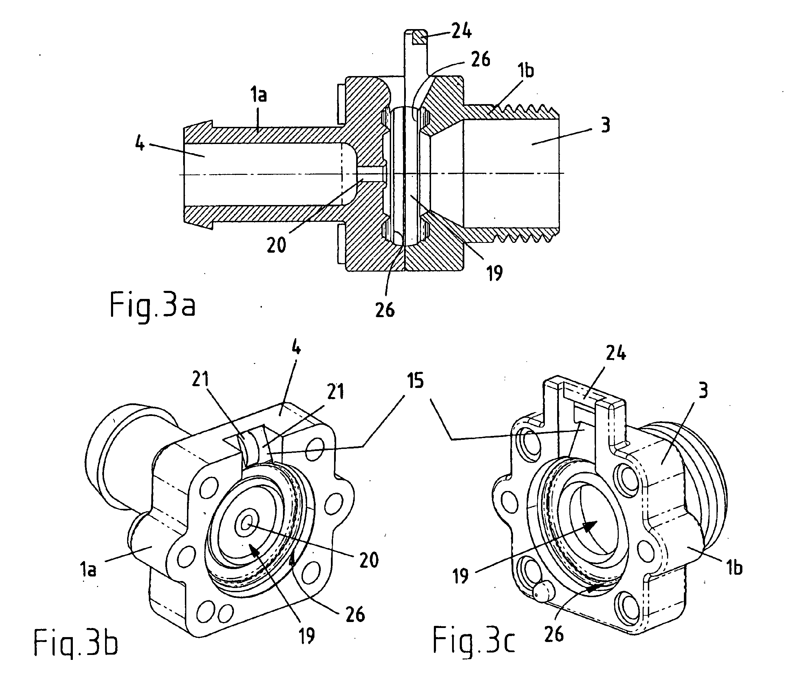

Fig. 3a zeigt den Ventilkörper 1 im montierten Zustand, Fig. 3b, 3c zeigt den linken und rechten Ventilkörperteil 1a, 1b. Daran ist der Sitz 26 der Dichtklappe sehr gut zu erkennen. Die linke Hälfte 1a des Ventilkörpers in Fig. 3a stellt den unten in Fig. 3b links dann auch dargestellten Ventilkörperauslaß 4 dar. In diesem Fall handelt es sich aufgrund des geringeren Mediumsauslasses um ein Ventil, welches nach dem Sitzventilprinzip funktioniert. Der Mediumeinlaß ist in der rechten Hälfte 1b dieses Querschnittes, der Ventilkörpereinlaß 3 somit mit einem größeren Volumen dargestellt.

Die untere Fig. 3b, 3c zeigt eine perspektivische Ansicht der einzelnen Ventilkörperteile 1a, 1b. Hier ist der Ventilkörperauslaß 4 mit einem geringeren Durchmesser für den Mediumfluß dargestellt. Bei dieser dargestellten Draufsicht ist die Abschrägung des Dichtklappenkanals 15 sehr gut zu erkennen. Im Ventilkörpereinlaß 3 ist ebenfalls die Abschrägung des Dichtklappenkanals 15 zu erkennen.

In Fig. 5a ist die Frontalansicht eines Ventilblockes 23 gezeigt. Der hier gezeigte Ventilblock 23 gezeigt. Der hier gezeigte Ventilblock 23 besteht dabei aus zwei Dichtklappen 5' und 5'', wie sie zum Beispiel in Fig. 2a, 2b und 2c beschrieben wurden. Sie weisen daher jeweils Hebel 5b' und 5b" auf.

Für eine effektive Ansteuerung ist vorgesehen, daß die beiden Hebel 5b' und 5b " an ihrem oberen Ende durch einen Hebelverbinder 18 miteinander verbunden sind. So ist es möglich, daß nur eine Auslöseeinheit 2 vorzusehen ist, die auf beide Dichtklappen 5 zu wirken vermag.

In Fig. 5b ist ein hydraulischer Schaltplan für ein erfindungsgemäßes Ventil, das nach dem Umschaltprinzip funktioniert, dargestellt. Der durch die Pumpe 28 erzeugte Druck liegt wechselseitig an der Ventilklappe 5', 5 " an und es kommt somit unabhängig von der Schaltposition zu einem Druck- beziehungsweise Kraftausgleich. Somit kann man dieses Ventil als Umschalt-Servoventil bezeichnen. Fig. 5b zeigt dabei zwei verschiedene Stellungen der beiden Ventilklappen 5', 5 " . Die erste Stellung ist mit dem durchgezogenen Strich dargestellt, die zweite Stellung mit der gestrichelten Darstellung.

Die Ventilklappen 5', 5 " sind letztendlich beide in gleicher Weise von der gleichen Auslöseeinheit 2 angesteuert. Dies kann entweder über das hier schematisch angeordnete gemeinsame Element 12 der Auslöseeinheit 2 erfolgen oder aber zum Beispiel mit dem Hebelverbinder 18.

Bezieht man sich nun auf die Stellung die durch den durchgezogenen Strich dargestellt ist, so verschließt die Dichtklappe 5' in dem linken Ventil 11' derart den Auslaß, indem der Sitz auf dem Auslaß aufliegt. In diser durchgezogen dargestellten Stellung verschließt die Dichtklappe 5 " im rechten Ventil 11" den Einlaß. Der eingangsseitig anliegende Druck preßt hier die Dichtung nicht in den Sitz sonderen eher heraus. Bei entsprechender Auslegung besteht Aufhebung der entgegengerichteten Kräfte und die Auslöseeinheit 2 sorgt für den Steuerungsvorgang, wobei hierbei nicht die herrschenden Kräfte überwunden werden müssen, da die Anordnung geschickterweise zu einer Aufhebung der entgegengerichteten Kräfte führt.

Die Umschaltfunktion der in Fig. 5b dargestellten Variante erfolgt dadurch, daß ausgangsseitig je zwei Auslässe 4a' und 4a" beziehungsweise 4b' und 4b" vorgesehen sind.

In Fig. 5c ist ein weiterer hydraulischer Schaltplan für ein erfindungsgemäßes Ventil, welches mit dem Servoprinzip funktioniert, dargestellt. Hierbei ist es günstig, daß der Eingangsdruck 27 wechselseitig an der Dichtklappe 5 " anliegt und es somit unabhängig von der Schaltposition zu einem Druckausgleich kommt. Dieses Prinzip kann auch bei Druckregel- beziehungsweise Druckausgleichsventilen verwendet werden, indem anstatt der Auslöseeinheit Druckfedern in den Dichtsitzbereichen eingesetzt werden, wobei die Regeldrücke dann durch die Federkräfte einstellbar sind. Bei solchen Systemen ist es sinnvoll, die Hebel nicht nach außen zu führen, sondern das Dichtelement nach außen abzudichten, so daß ein nach außen dichtes und hochdruckfestes System aufgebaut werden kann. Die Anordnung ist hier so gewählt, daß in einem rechten Ventil 11" die Klappe 5'' beidseitig einen Dichtsitz aufweist und in der Lage ist, die beiden Auslässe 4a beziehungsweise 4b zu verschließen. Auch hier ist wieder mit durchgezogener linie eine erste und mit gestrichelter Linie eine zweite Stellung gezeigt.

In der mit durchgezogener Linie gezeigten Stellung schließt die Dichtklappe 5'' bei Anliegen des Druckes 27 den rechten Ausgang 4b. Über die gezeigte Mechanik, insbesondere der Schwenkachse 16 resultiert eine Schubbewegung in dem Element 12 nach links, welches die Dichtklappe 5' nach rechts auf den Einlaß preßt. Da hier der Druck 27 anliegt, sind auch hier wieder die jeweiligen Kräfte entgegengerichtet und heben sich auf. In der durchgezogenen Stellung sind die Verhältnisse analog.

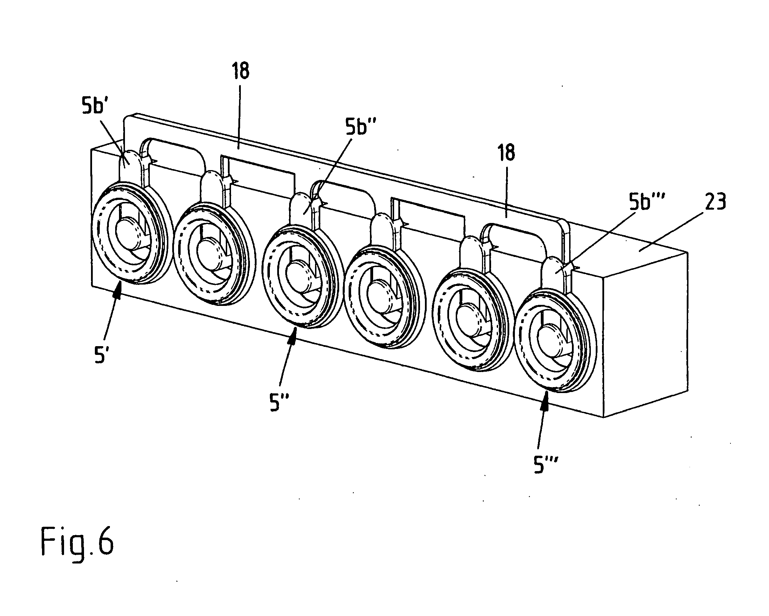

Fig. 6 zeigt einen verhältnismäßig komplex aufgebauten Ventilblock 23 mit insgesamt sechs nebeneinander angeordneten Dichtklappen 5' , 5" , 5'''. Wesentlich bei dieser Ausgestaltung ist, daß wiederum alle Dichtklappen identisch ausgebildet sind und je einen Hebel 5b', 5b", 5b"' tragen. Alle diese Hebel 5b', fb", 5b''' sind wiederum durch den Hebelverbinder 18 miteinander für eine gemeinsame Ansteuerung verbunden.

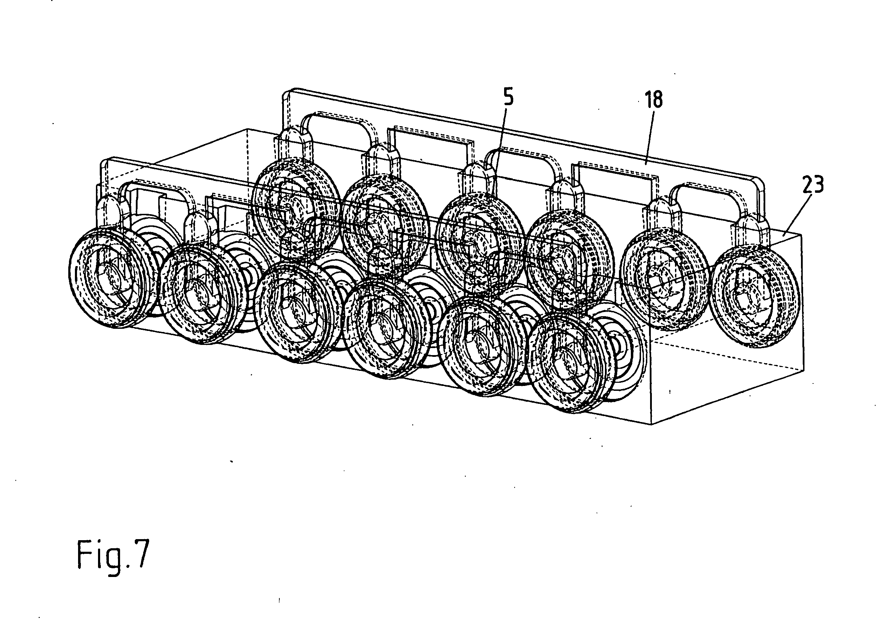

In Fig. 7 ist eine perspektivische Ansicht von nebeneinander und gleichzeitig hintereinander liegenden Ventilen 11 in einem Ventilblock 23 dargestellt.

## Patentansprüche

1. Ventil (11) zum Schalten beziehungsweise Regeln von Strömungen oder Drücken eines festen, flüssigen oder gasförmigen Mediums, wobei eine Dichtklappe des Ventils von einer Auslöseeinheit (2) betätigt wird und die Dichtklappe (5) in einer Ventilkammer (19) eines Ventilkörpers (1) des Ventils aufgrund der Stellung der Auslöseeinheit (2) positionierbar ist, die Dichtklappe einen mit der Auslöseeinheit zusammenwirkenden Hebel (5b) aufweist und der Hebel mindestens einen Dichtsitz (5d) trägt, wobei der Dichtsitz (5d) zumindest teilweise von einer Dichtung (5c) umgeben ist, die einen Dichtklappenkanal (15) des Ventilskörpers (1) abdichtet, **dadurch gekennzeichnet, daß** der Dichtklappenkanal (15) mindestens eine Anschlagfläche (21) für den Hebel (5b) aufweist.

2. Ventil nach Anspruch 1, **dadurch gekennzeichnet, daß** die Dichtung (5c) von dem Dichtsitz (5d) beabstandet ist.

3. Ventil nach einem oder mehreren der vorhergehenden Ansprüche, **dadurch gekennzeichnet, daß** der Ventilkörper- (1) zur Bildung der Ventilkammer (19) aus mindestens zwei Ventilkörperteilen (10, 16) besteht und die Dichtung (5c) zwischen den Ventilkörperteilen (10, 16) angeordnet ist und zur Abdichtung der Ventilkammer (19) dient.

4. Ventil nach einem oder mehreren der vorhergehenden Ansprüche, **dadurch gekennzeichnet, daß** die Dichtung (5c) als Ringdichtung ausgebildet ist.

5. Ventil nach einem oder mehreren der vorhergehenden Ansprüche, **dadurch gekennzeichnet, daß** die Dichtung (5c) den Hebel (5b) mit dem Dichtsitz (5d) gegenüber der Auslöseeinheit (2) abdichtet und der Hebel (5b) die Dichtung (5c) durchdringt.

6. Ventil nach einem oder mehreren der vorhergehenden Ansprüche, **dadurch gekennzeichnet, daß** der Hebel (5b) mit der Dichtung (5c) eine vormontierte Einheit bildet oder der Dichtsitz (5d) fest auf dem Hebel (5b) angeordnet, insbesondere auf diesen aufgespritzt ist.

7. Ventil nach einem oder mehreren der vorhergehenden Ansprüche, **dadurch gekennzeichnet, daß** der Hebel (5b) als um eine Schwenkachse (16) schwenkender Schwenkhebel (5b) ausgebildet ist und die Schwenkachse (16) im Bereich der Dichtung (5c) angeordnet ist.

8. Ventil nach Anspruch 7, **dadurch gekennzeichnet, daß** sich der Schwenkhebel (5b) im wesentlichen rechtwinklig zur Schwenkachse (16) erstreckt und der Schwenkhebel (5b) bei einer Bewegung der Dichtklappe (5) Bereiche der Dichtung (5c) komprimiert.

9. Ventil nach einem oder mehreren der vorhergehenden Ansprüche, **dadurch gekennzeichnet, daß** der Hebel (5b) beidseitig je einen Dichtsitz (5d) trägt.

10. Ventil nach einem oder mehreren der vorergehenden Ansprüche, **dadurch gekennzeichnet, daß** die Auslöseeinheit (2) ein sich translatorisch oder rotatorisch bewegendes Element (12) aufweist, welches auf den Hebel (5b) wirkt.

11. Ventil nach Anspruch 10, **dadurch gekennzeichnet, dass** durch eine Bewegung des Elementes (12) der Dichtsitz (5d) von einem Durchlass (20) entfernt wird und der Dichtsitz (5d) diesen für einen Durchfluss freigibt.

12. Ventil nach Anpruch 10 oder 11, **dadurch gekennzeichnet daß** der Hebel (5b) oder das Element (12) eine Langloch- oder Gabel-Führung (17) aufweist.

13. Ventil nach Anspruch 10 oder 11, **gekennzeichnet durch** eine starre Verbindung zwischen Element (12) und Hebel (5b).

14. Ventil nach einem der Ansprüche 10 bis 12, **gekennzeichnet durch** eine schwimmende Verbindung zwischen Element (12) und Hebel (5b), woraus bei der Bewegung des Elementes (12) nicht sofort eine Bewegung des Hebels (5b) resultiert.

15. Ventil nach Anspruch 14, **dadurch gekennzeichnet, daß** das Element (12) eine Ringnut (13) zur Aufnahme des Hebels (5b) aufweist, wobei die Breite (f) der Ringnut größer ist als die Dicke des Hebels (5b).

16. Ventil nach einem oder mehreren der vorhergehenden Ansprüche 10 bis 15, **dadurch gekennzeichnet, daß** das Element (12) als Anker, insbesondere als Teleskopanker ausgebildet ist.

17. Ventil nach einem oder mehreren der vorhergehenden Ansprüche, **dadurch gekennzeichnet, daß** der Hebel (5b) mit einer Hebelfläche (22) mit der Anschlagfläche (21) zusammenwirkt oder durch ein Anliegen des Hebels (5b) an der Anschlagfläche (21) der Hebel (5b) unter eine mechanische Vorspannung gesetzt ist.

18. Ventil nach einem oder mehreren der vorhergehenden Ansprüche, **dadurch gekennzeichnet, daß** die Lage der Anschlagfläche (21) bezüglich des Ventilkörpers (1) einstellbar und veränderbar ist oder die Lage der Hebelfläche (22) bezüglich der Dichtklappe (5) beziehungsweise des Hebels (5b) einstellbar und veränderbar ist.

19. Ventil nach einem oder mehreren der vorhergehenden Ansprüche, **dadurch gekennzeichnet, daß** die Auslöseeinheit. (2) gegen eine Federkraft auf die Dichtklappe (5) wirkt.

20. Ventil nach einem oder mehreren der vorhergehenden Ansprüche, **gekennzeichnet durch** im Ventil (11) angeordnete vorspannelemente für die Dichtklappe (5).

21. Ventilblock, bestehend aus mindestens zwei Ventilen, nach einem oder mehreren der vorhergehenden Ansprüche.

22. ventilblock nach Anspruch 21, **dadurch gekennzeichnet, daß** zumindest zwei Ventile (11', 111') baugleich ausgestaltet sind.

23. Ventilblock nach einem oder beiden der vorhergehenden Ansprüche 21 oder 22, **dadurch gekennzeichnet, daß** die Hebel (5b', 5b'') der Dichtklappen (5', 5'') durch einen Hebelverbinder (18) insbesondere fest miteinander verbunden sind oder eine Auslöseeinheit (2) für mehrere Dichtklappen (5) vorgesehen ist.

24. Ventilblock nach einem oder beiden der vorhergehenden Ansprüche 22 oder 23, **dadurch gekennzeichnet, daß** die Hebel (5b) mindestens zweier Dichtlappen (5) derart verbunden sind, daß eine verschließbewegung der ersten Dichtklappe (5) eine Öffnungsbewegung der zweiten Dichtklappe (5) bewirkt.

## Claims

1. Valve (11) for switching or adjusting flows or pressures of a solid, liquid or gaseous medium, a seal bonnet of the valve being operated by a trigger unit (2), and the seal bonnet (5) being positioned in a valve housing (19) of a valve body (1) of the valve because of the position of the trigger unit (2), the valve bonnet having a lever (5b) interacting with the trigger unit, and the lever carrying at least one seal seat (5d), the seal seat (5d) being encircled at least partly by a seal (5c) sealing a seal bonnet channel (15) of the valve body (1), **characterised in that** the seal bonnet channel (15) has at least one stop face (21) for the lever (5b).

2. Valve according to claim 1, **characterised in that** the seal (5c) is spaced apart from the seal seat (5d).

3. Valve according to one or more of the preceding claims,
**characterised in that** the valve body (1) for forming the valve housing (19) consists of at least two valve body parts (10, 16), and the seal (5c) is arranged between the valve body parts (10, 16) and serves for sealing the valve housing (19).

4. Valve according to one or more of the preceding claims, **characterised in that** the seal (5c) is designed as circular seal.

5. Valve according to one or more of the preceding claims, **characterised in that** the seal (5c) seals the lever (5b) with the seal seat (5d) against the trigger unit (2), and the lever (5b) penetrates the seal (5c).

6. Valve according to one or more of the preceding claims, **characterised in that** the lever (5b) forms a preassembled unit together with the seal (5c), or the seal seat (5d) is arranged fixedly on the lever (5d), in particular is sprayed on it.

7. Valve according to one or more of the preceding claims, **characterised in that** the lever (5b) is designed as swivelling lever (5b) which can swivel around a swivelling pin (16), and the swivelling pin (16) is arranged in the area of the seal (5c).

8. Valve according to claim 7, **characterised in that** the swivelling lever (5b) extends essentially rectangular to the swivelling pin (16), and the swivelling lever (5b) compresses, when the seal bonnet (5) moves, areas of the seal (5c).

9. Valve according to one or more of the preceding claims, **characterised in that** the lever (5b) carries on both sides one seat seal (5d) each.

10. Valve according to one or more of the preceding claims, **characterised in that** the trigger unit (2) has an element (12) moving translatory or rotatory acting on the lever (5b).

11. Valve according to claim 10, **characterised in that** by a movement of the element (12) the seal seat (5d) is removed from a passage (20), and the seal seat (5d) releases it for a flowing-through.

12. Valve according either to claim 10 or 11, **characterised in that** the lever (5b) or the element (12) has a long hole or fork guide (17).

13. Valve according to either claim 10 or 11, **characterised by** a rigid connection between element (12) and lever (5b).

14. Valve according to one of the claims 10 to 12, **characterised by** a floating connection between element (12) and lever (5b) where, when the element (12) moves, the result is not an immediate move of the lever (5b).

15. Valve according to claim 14, **characterised in that** the element (12) has a circular groove (13) for holding the lever (5b), the width (f) of the circular groove being larger than the thickness of the lever (5b).

16. Valve according to one or more of the preceding claims 10 to 15, **characterised in that** the element (12) is designed as armature, in particular as telescopic armature.

17. Valve according to one or more of the preceding claims,
**characterised in that** the lever (5b) interacts by means of a lever face (22) with the stop face (21), or the lever (5b) is set under mechanic prestress by contact of the lever (5b) with the stop face (21).

18. Valve according to one or more of the preceding claims, **characterised in that** the position of the stop face (21) relatively to the valve body (1) can be set and changed, or the position of the lever face (22) relatively to the seal bonnet (5) or the lever (5b) can be set and changed.

19. Valve according to one or more of the preceding claims, **characterised in that** the trigger unit (2) acts against a spring force on the seal bonnet (5).

20. Valve according to one or more of the preceding claims, **characterised by** prestress elements for the seal bonnet (5) arranged in the valve (11).

21. Valve block consisting of at least two valves according to one or more of the preceding claims.

22. Valve block according to claim 21, **characterised in that** at least two valves (11', 11'') are designed in the same way of construction.

23. Valve block according to one or both of the preceding claims 21 or 22, **characterised in that** the levers (5b', 5b'') of the seal bonnets (5', 5'') are connected in particular rigidly to each other by a lever connector (18), or a trigger unit (2) is provided for several seal bonnets (5).

24. Valve block according either to one or both of the preceding claims 22 or 23, **characterised in that** the levers (5b) of at least two seal bonnets (5) are connected in such a way that a closing movement of the first seal bonnet (5) causes an opening movement of the second seal bonnet (5).

## Revendications

1. Vanne (11) destinée à commuter ou réguler les flux ou les pressions d'un milieu solide, liquide ou gazeux, utilisant un clapet d'étanchéité commandé par une unité de déclenchement (2), ledit clapet d'étanchéité (5) étant situé dans une chambre de vanne (19) d'un corps de vanne (1) à une position pouvant être ajustée en fonction de la position de l'unité de déclenchement (2) et comportant un levier (5b), qui interagit avec l'unité de déclenchement et possède un siège d'étanchéité (5d) au moins partiellement entouré par un joint d'étanchéité (5c) lequel rend étanche un canal (15) dudit clapet d'étanchéité du corps de vanne (1), **caractérisée en ce que** le canal (15) dudit clapet d'étanchéité possède au moins une surface d'appui (21) pour le levier (5b).

2. Vanne selon la revendication 1, **caractérisée en ce que** le joint d'étanchéité (5c) est espacé du siège d'étanchéité (5d).

3. Vanne selon une ou plusieurs des revendications précédentes, **caractérisée en ce que** le corps de vanne (1) consiste en au moins deux éléments de corps de vanne (10, 16) afin de former une chambre de vanne (19) et **en ce que** le joint d'étanchéité (5c) est situé entre les éléments de corps de vanne (10, 16) et sert à rendre étanche la chambre de vanne (19).

4. Vanne selon une ou plusieurs des revendications précédentes, **caractérisée en ce que** le joint d'étanchéité (5c) est un joint circulaire.

5. Vanne selon une ou plusieurs des revendications précédentes, **caractérisée en ce que** le joint d'étanchéité (5c) et le siège d'étanchéité (5d) rendent étanche le levier (5b) par rapport à l'unité de déclenchement (1) et **en ce que** le levier (5b) traverse le joint d'étanchéité (5c).

6. Vanne selon une ou plusieurs des revendications précédentes, **caractérisée en ce que** la tige (5b) et le joint d'étanchéité (5c) forment une unité préfabriquée ou en ce que le siège d'étanchéité (5d) est fixé sur le levier (5b) et en particulier **en ce que** la fixation est réalisée par un procédé de projection.

7. Vanne selon une ou plusieurs des revendications précédentes, **caractérisée en ce que** le levier (5b) est façonné comme un levier pivotant (5b) pouvant pivoter autour d'un axe de rotation (16) et **en ce que** l'axe de rotation (16) est situé au niveau du joint d'étanchéité (5c).

8. Vanne selon une ou plusieurs des revendications précédentes, **caractérisée en ce que** le levier pivotant (5b) se situe principalement perpendiculairement à l'axe de rotation (16) et comprime des zones du joint d'étanchéité (5c) lors d'un mouvement du clapet d'étanchéité (5).

9. Vanne selon une ou plusieurs des revendications précédentes, **caractérisée en ce que** le levier (5b) comporte un siège d'étanchéité (5d) sur chacun de ses deux côtés.

10. Vanne selon une ou plusieurs des revendications précédentes, **caractérisée en ce que** l'unité de déclenchement (2) possède un élément (12) mobile dans le sens de translation et de rotation agissant sur le levier (5b).

11. Vanne selon la revendication 10, **caractérisée en ce que** le mouvement de l'élément (12) éloigne le siège d'étanchéité (5d) de l'ouverture (20) de façon à ce que le siège d'étanchéité libère le flux à travers cette ouverture.

12. Vanne selon une des revendications 10 ou 11, **caractérisée en ce que** le levier (5b) ou l'élément (12) possède un guidage pour un élément ayant un alésage allongé ou une fourchette (17).

13. Vanne selon une des revendications 10 ou 11, **caractérisée par** l'existence d'un lien rigide entre l'élément (12) et le levier (5b).

14. Vanne selon une des revendications 10 à 12, **caractérisée par** un lien flottant entre l'élément (12) et le levier (5b) permettant un mouvement de l'élément (12) sans provoquer immédiatement un mouvement du levier (5b).

15. Vanne selon la revendication 14, **caractérisée en ce que** l'élément (12) comporte une gorge circulaire (13) destinée à recevoir le levier (5b) et dont la largeur (f) est supérieure à l'épaisseur du levier (5b).

16. Vanne selon une ou plusieurs des revendications précédentes, **caractérisée en ce que** l'élément (12) est un noyau mobile et en particulier un noyau télescopique.

17. Vanne selon une ou plusieurs des revendications précédentes, **caractérisée en ce que** la surface (22) du levier (5b) agit sur une surface d'appui (21) ou **en ce que** l'appui du levier (5b) sur la surface d'appui (21) précontraint le levier (5b).

18. Vanne selon une ou plusieurs des revendications précédentes, **caractérisée en ce que** la position de la surface d'appui (21) peut être ajustée et modifiée à l'intérieur du corps de vanne (1) ou **en ce que** la position de la surface (22) du levier peut être ajustée et modifiée par rapport à celle du clapet d'étanchéité (5) ou du levier (5b).

19. Vanne selon une ou plusieurs des revendications précédentes, **caractérisée en ce que** l'unité de déclenchement (2) agit contre la force d'un ressort sur le clapet d'étanchéité (5).

20. Vanne selon une ou plusieurs des revendications précédentes, **caractérisée par** l'existence à l'intérieur de la vanne (11) d'éléments mettant en précontrainte le clapet d'étanchéité (5).

21. Bloc de vanne consistant en au moins deux vannes selon une ou plusieurs revendications précédentes.

22. Bloc de vanne selon la revendication 21, **caractérisé en ce qu'**au moins deux vannes (11', 11'') sont d'une construction identique.

23. Bloc de vanne selon une ou les deux revendications précédentes 21 et 22, **caractérisé en ce que** les leviers (5b', 5b'') destinés à agir sur les clapets d'étanchéité (5', 5'') sont en particulier mécaniquement liés entre eux ou **en ce qu'**il existe une unité de déclenchement (2) commune à plusieurs clapets d'étanchéité (5).

24. Bloc de vanne selon une ou les deux revendications précédentes 22 et 23, **caractérisé en ce que** les leviers (5b) d'au moins deux clapets d'étanchéité (5) sont liés entre eux de façon à ce que le mouvement de fermeture du premier clapet d'étanchéité (5) provoque un mouvement d'ouverture du deuxième clapet d'étanchéité (5).
